# EUROPÄISCHE PATENTSCHRIFT

(11) **EP 2 005 042 B1**
(45) Veröffentlichungstag und Bekanntmachung des Hinweises auf die Patenterteilung: **30.09.2009**
(21) Anmeldenummer: 07704620.9
(22) Anmeldetag: 16.02.2007
(51) Int. Cl.: F16J 15/46, B29C 33/00, B29C 44/58, F16J 15/06

(54) **AUFBLASBARE DICHTVORRICHTUNG FÜR EIN FORMWERKZEUG**
INFLATABLE SEALING DEVICE FOR A DIE
DISPOSITIF D'ÉTANCHÉITÉ GONFLABLE POUR OUTIL DE FORMAGE

(30) Priorität: 01.04.2006 DE 102006015184
(43) Veröffentlichungstag der Anmeldung: 24.12.2008
(73) Patentinhaber: KraussMaffei Technologies GmbH, 80997 München (DE)
(72) Erfinder: JANOTTA, Rainer, 49143 Bissendorf (DE)
(74) Vertreter: Zollner, Richard
(86) Internationale Anmeldenummer: PCT/EP2007/051498
(87) Internationale Veröffentlichungsnummer: WO 2007/113042

(56) Entgegenhaltungen:
- EP-A2- 1 361 380
- AT-U1- 8 084
- DE-A1-102004 038 114
- DE-U1- 29 612 132
- FR-A- 2 691 100
- US-B1- 6 315 295

## Beschreibung

Die vorliegende Erfindung betrifft eine aufblasbare Dichtvorrichtung für ein Formwerkzeug gemäß dem Oberbegriff des Patentanspruchs 1.

Bei der Herstellung von beschichteten Kunststoffprodukten, insbesondere von geschäumten Sandwich-Kunststoffprodukten mit einem Polyurethan-Material-Kern, werden beim Herstellungsprozess in eine Kavität beispielsweise ein die Außenhaut bildendes Einlegematerial (Einleger) eingelegt sowie eine möglicherweise die Innenfläche bildende Haut. Zwischen dem Einleger, bei der es sich z.B. um eine tiefgezogene Folie aber auch ein Metallteil wie ein Aluminiumelement etc. handeln kann, und der Haut wird in der Kavität ein Kunststoffmaterial, beispielsweise ein Schaummaterial, vorzugsweise ein Polyurethan-Material eingebracht, welches duroplastisch oder thermoplastisch aushärtet. Auf diese Art und Weise ist nach dem Aushärten ein Sandwich-Produkt gebildet, das aus verschiedenen Schichten besteht; bei dem oben genannten Beispiel ist eine die Außenhaut bildende Einlegerschicht, eine den Kern bildende Polyurethan-Schicht und eine die Innenseite bildende Hautschicht vorhanden

Beim Befüllen des Zwischenraumes zwischen dem Einleger und der Haut ist es nun wichtig, sicherzustellen, dass insbesondere im Randbereich des herzustellenden Produktes kein Schaummaterial zwischen Einleger und Haut an die Umgebung austritt. Zu diesem Zweck sollten der Einleger und die Haut zumindest im Randbereich des Produktes so fest dichtend aneinandergedrückt werden, dass auch beim Aufbau eines bestimmten Druckes im Schaummaterial nichts zwischen diesen beiden Teilen an die Umgebung austreten kann.

Um eine solche Dichtheit zu gewährleisten, ist es bekannt, in den Formwerkzeugen Dichtungsvorrichtungen vorzusehen, die ein entsprechendes Aufeinanderpressen von Haut und Einleger sicherstellen.

Eine gattungsgemäße Ausführungsform einer solchen Dichtungsvorrichtung ist in der AT-A-8 084 U1 offenbart, bei der ein aufblasbarer Dichtschlauch trennflächenseitig in einer Formhälfte eingelegt ist, wobei durch Andrücken des Dichtschlauches inkl. eines ausfahrbaren Stempels an die Haut und in Reaktion der Haut gegen den Einleger eine gewünschte Abdichtung zwischen Haut und Einleger herbeigeführt wird. Der Grad der Abdichtung wird durch den angelegten Luftdruck bestimmt. Vorzugsweise sollte die Dichteinrichtung natürlich über den gesamten Umfang der Kavität verlaufen, damit die Abdichtung insgesamt sichergestellt ist.

Nachteilig bei dieser Ausführungsform ist eine etwaige Beschädigung des Hautmaterials mittels des Stempels, wenn dieser mit unverminderter Kraft angedrückt wird. Überdies birgt die Ausführungsform nach dem Stand der Technik die Gefahr eines Auseinanderfallens der Anordnung bei geöffnetem Werkzeuge.

Weitere Ausführungsformen von aufblasbaren Dichtschläuchen sind aus den Dokumenten DE 10 2004 038 114 A1 und EP 1 361 380 A2 bekannt.

Aufgabe der vorliegenden Erfindung ist es, eine aufblasbaren Dichtvorrichtung der eingangs genannten Art anzugeben, bei der vorgenannten Nachteile gelöst sind.

Die vorstehend genannte Aufgabe wird durch die im Anspruch 1 angegebene Merkmale gelöst.

Die aufblasbare Dichtvorrichtung umfasst einen in einer Buchse aufgenommenen, geführten und über eine Luftzufuhr unter Anlegen von Luftdruck ausfahrbaren Stempel sowie einen mit dem Stempel verbundenen Dichtschlauch, dessen Innenraum mit der Luftzufuhr verbunden oder verbindbar ist, so dass sich der Dichtschlauch beim Anlegen eines Luftdruckes radial ausdehnt. Erfindungsgemäß ist der Stempel in der Buchse derart geführt, dass ein begrenzter Hub vorgegeben ist.

Durch die Anordnung der Kombination von Dichtschlauch und hubbegrenztem Stempel ist auf einfache Art und Weise eine Abdichtung bis zu einem genau definierten Ende der Dichtvorrichtung gewährleistet, da die Dichtung in Form des Schlauches und des ausfahrbaren Stempels bis zum festgelegten Ende "aufbtasbar" ist. Damit können auch enge Übergänge sicher abgedichtet werden. Überdies kann ein Standardrundschlauch als Element für die Dichtung eingesetzt werden, so dass keine übermäßigen Kosten entstehen. Eine Besonderheit stellt die Hubbegrenzung des ausfahrbaren Stempels dar, der zum einen eine Beschädigung von Haut und Einleger verhindert und zum anderen Sicherstellt, dass die Einheit der aufblasbaren Dichtvorrichtung bei geöffnetem Formwerkzeug nicht auseinander fällt.

Die Hubbegrenzung kann dadurch realisiert werden, dass am Außenumfang des Stempels eine Nut und eine Ausnehmung angeordnet ist, in welche ein Eingriffsteil der Buchse hineinragt, wobei die Nut oder die Ausnehmung sowie das Eingriffsteil derart dimensioniert sind, dass der begrenzte Hub konstruktiv festgelegt ist. Natürlich kann die Konstruktion auch mit vertauschten Elementen realisiert werden, also dass im Innenumfang der Buchse eine Nut vorgesehen ist, in die ein Eingriffsteil des Stempels hineinragt oder eingreift. Wesentlich ist lediglich, dass durch das Zusammenwirken von Ausnehmung/Nut und Eingriffsteil ein Anschlag für die Bewegung des Stempels realisiert ist.

Eine einfache Konstruktion zur Erzeugung des Eingriffsteils, welches an der Buchse angeordnet ist, stellt ein Sicherungs- oder Segerring dar, der in einer Innennut der Buchse fest aufgenommen ist.

Um die Dichtigkeit der Anordnung zu gewährleisten, kann zwischen dem Stempel und der Buchse überdies eine eigene Dichtung angeordnet sein. Beispielsweise kann ein O-Ring vorgesehen sein, der in einer Nut entweder des Stempels oder der Buchse eingesetzt ist.

Um eine Verletzung der Haut zu vermeiden, ist der Kopfbereich des Stempels mit vorzugsweise mit einem Kunststoffüberzug oder einer Kunststoffkappe, alternativ auch mit Gummi oder einem entsprechend weichem Material, versehen.

Ein Zusammenfallen des Dichtschlauches wird dadurch verhindert, dass in seinem Innenraum eine Füllschnur angeordnet ist. Diese kann im Querschnitt beispielsweise sternförmig ausgebildet sein.

Strömungstechnisch ist im Stempel ein Kanal vorgesehen, der eine Strömungsverbindung mit einer Sack-Bohrung, in die der Dichtschlauch eingesetzt ist, aufweist. Am anderen Ende des Kanals ist ein sich in Strömungsrichtung verengender Einlass ausgebildet. Durch einen solchen sich verengenden, beispielsweise einen konisch geformten Einlass, wird in Abhängigkeit des angelegten Luftdruckes die Kraft bestimmt, mit welcher der Stempel nach oben gedrückt wird und die Haut gegen, den Einleger presst.

Weitere Vorteile und Merkmale der Erfindung sind in den Unteransprüchen definiert.

Die Erfindung wird nachfolgend anhand eines Ausführungsbeispiels und mit Bezug auf die beiliegenden Zeichnungen näher erläutert. Die Zeichnungen zeigen in
- Figur 1: eine stark schematisierte Schnitt-Darstellung eines geschlossenen Formwerkzeugs mit Einleger, Haut und Schaumstoff, wobei die Enden zwischen Einleger und Haut mittels einer erfindungsgemäßen Dichtvorrichtung abgedichtet sind,
- Figur 2: eine schematische Darstellung einer erfindungsgemäßen Dichtvorrichtung gemäß einer ersten Ausführungsform, die aus der Form herausgenommen ist, in Seitenansicht,
- Figur 3: eine Explosionszeichnung der aufblasbaren Dichtvorrichtung gemäß Figur 2
- Figur 4: einen Querschnitt durch den Dichtschlauch mit Füllschnur,
- Figur 5: eine perspektivische Darstellung einer Buchse für die erfindungsgemäße Dichtvorrichtung gemäß Figur 2,
- Figur 6: eine perspektivische Darstellung eines Stempels für die erfindungsgemäße Dichtvorrichtung gemäß Figur 2,
- Figur 7: eine schematische Darstellung der Luftkanäle im Stempel der erfindüngsgemäßen Dichtvorrichtung,
- Figur 8: zwei nebeneinander angeordnete und dichtend zusammenwirkende erfindungsgemäße Dichtvorrichtungen gemäß Figur 2,
- Figur 9a: eine Explosionszeichnung einer erfindungsgemäßen aufblasbaren Dichtvorrichtung gemäß einer zweiten Ausführungsform,
- Figur 9b: eine schematische Darstellung einer Dichtvorrichtung gemäß Fig. 9a in zusammengebautem Zustand,
- Figur 10: eine Detaildarstellung einer Fräskontur für eine Dichtung bei einer Dichtvorrichtung gemäß Fig. 9a und
- Figur 11: eine schematische Schnittdarstellung einer Dichtvorrichtung gemäß Fig. 9a in eingebautem Zustand.

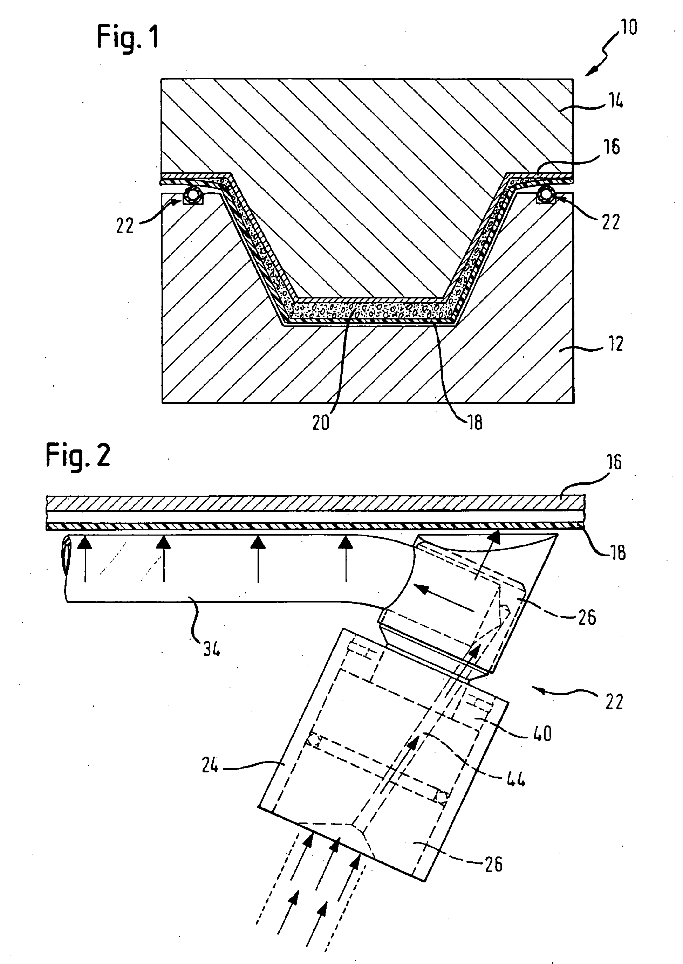

In Figur 1 ist in sehr schematischer Weise dargestellt, wie die erfindungsgemäße Dichtvorrichtung bzw. ein Teil davon wirkt. Gezeigt sind eine untere Werkzeughälfte 12 und eine obere Werkzeughälfte 14, die im geschlossenen Zustand abgebildet sind und zwischen sich eine Formkavität ausbilden. In diese Formkavität ist einerseits ein an der oberen Werkzeughälfte 14 anliegender Einleger 16 eingesetzt sowie eine Haut 18, die an der Kavitätsfläche der unteren Werkzeughälfte 12 anliegt. Zwischen dem Einleger 16 und der Haut 18 ist ein Polyurethan-Material eingebracht, welches aushärtet, so dass nach dem Aushärten insgesamt ein sandwichartiges Produkt aus Einleger, Polyurethan-Kern und Haut hergestellt ist.

Um ein Austreten des vor dem Aushärten plastischen oder flüssigen Polyurethan-Materials zu verhindern, ist im Randbereich der Schäumform eine Dichtvorrichtung 22 angeordnet, die in Figur 1 lediglich im Schnitt durch einen Dichtschlauch zu erkennen ist. Die Dichtvorrichtung 22 ist in einer Nut bzw. Ausnehmung der unteren Werkzeughälfte 12 aufgenommen und umgibt die Kavität in der Trennebene im wesentlichen vollständig umlaufend.

Die Einzelheiten zur aufblasbaren Dichtvorrichtung 22 in der in den Figuren dargestellten Ausführungsform sind in den Figuren 2 bis 7 zu erkennen, wobei in allen Figuren ein Runddichtschlauch 34 verkürzt dargestellt ist. Bei den tatsächlichen Ausführungsformen kann der Runddichtschlauch 34 sehr viel länger ausgeführt sein.

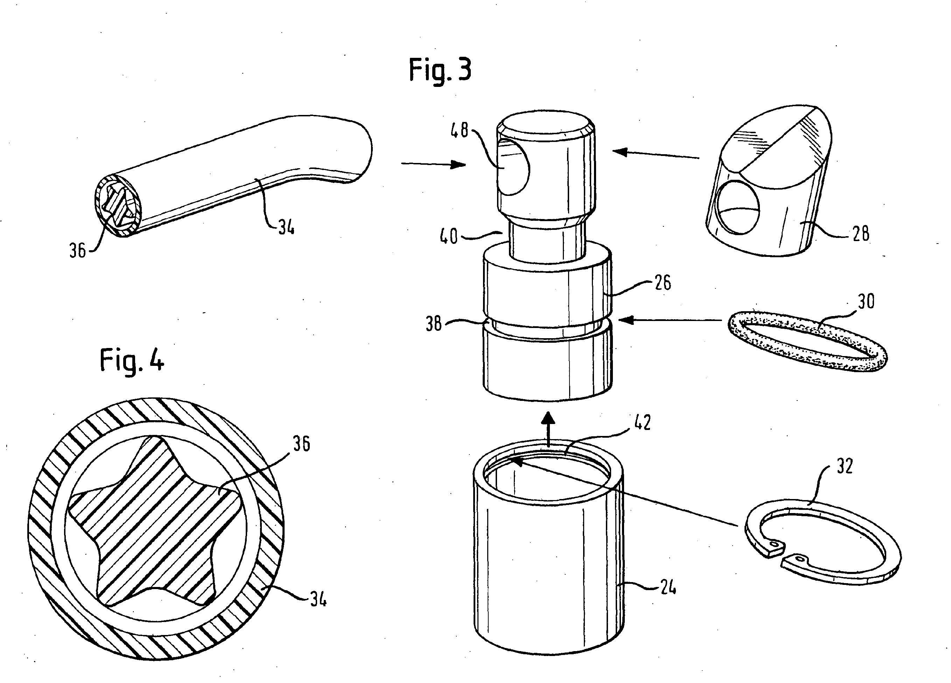

Die Dichtvorrichtung 22 umfasst eine Buchse 24 oder Hülse, in der ein Stempel 26 mit einem begrenzten Hub hin und her verschieblich aufgenommen ist. Im Kopfbereich mit dem Stempel 26 verbunden ist der Runddichtschlauch 34, der, wie später noch erläutert wird, aufblasbar ist. Wie in den Figuren 3, 5 und 6 im Detail dargestellt, weist die Buchse 24 eine Innennut auf, in der ein Segerring 32 fest eingesetzt ist. Der Stempel 26 besitzt auf der anderen Seite eine gestufte ringförmige Nut 40 oder Ausnehmung im mittleren Bereich. Oberhalb der gestuften Nut 40 erstreckt sich der Kopfbereich des Stempels. Unterhalb der gestuften Nut 40 ist ein im wesentlichen zylindrischer Teil des Stempels angeordnet, in dem im wesentlichen mittig eine weitere, weniger tiefe Ringnut 38 angeordnet ist. In diese Ringnut 38 ist ein O-Ring 30 eingesetzt.

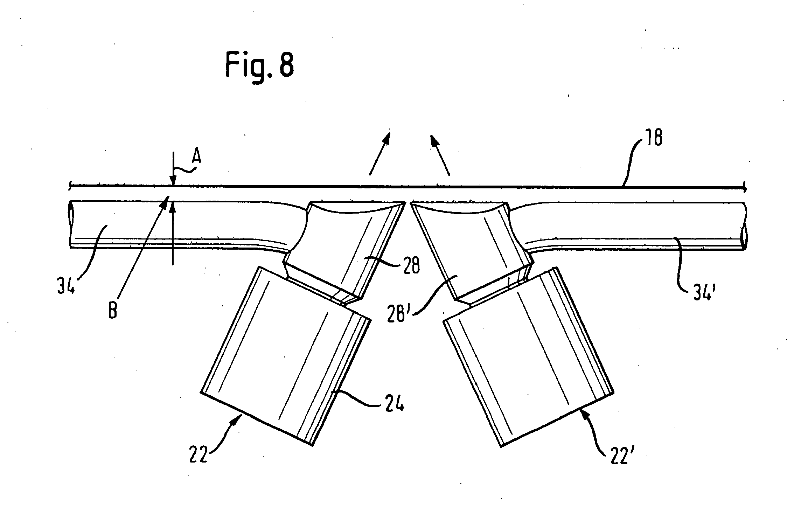

Beim Zusammenbau von Stempel 26 und Buchse 24 erstreckt sich der Segerring 32 in den Bereich der Stufennut 40 hinein, wobei durch den zylindrischen unteren Teil des Stempels 26 in Verbindung mit dem Segerring 32 ein Anschlag gebildet ist, der ein übermäßiges Verschieben des Stempels 36 aus der Buchse 24 nach oben verhindert und den Hub somit begrenzt. Die Hubbegrenzung ist u.a. in Figur 8 mit den Buchstaben A und B angedeutet und kann beispielsweise im Bereich von 5 mm gewählt sein.

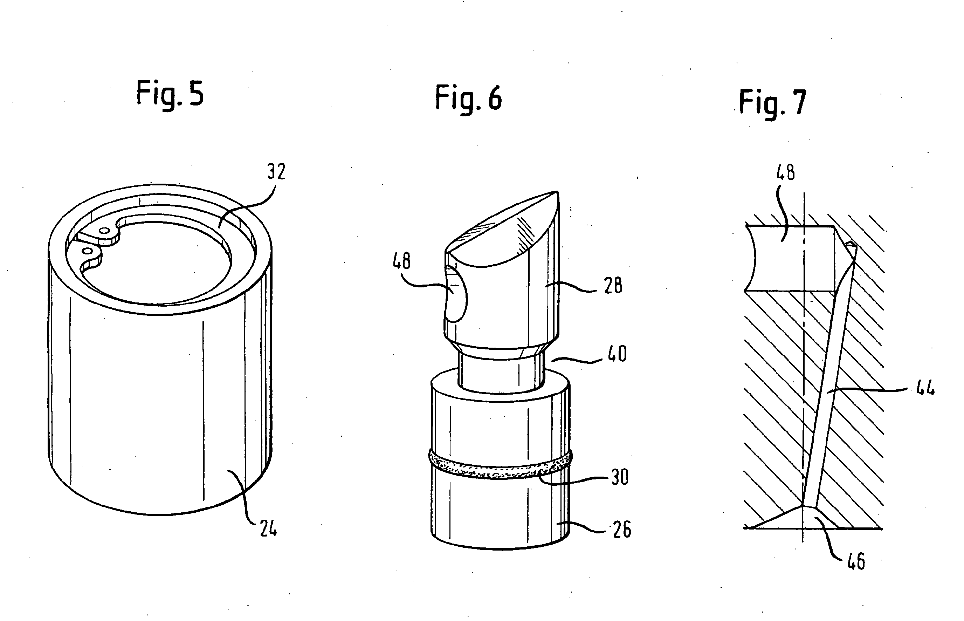

Der Stempel 26 besitzt auf diese Weise eine Beweglichkeit von etwa 5 mm. Im Kopfbereich des Stempels ist eine Sackbohrung 48 ausgebildet, wie sie in Figur 7 zu erkennen ist. In dieser Sachbohrung 48 ist ein offenes Ende des Runddichtschlauches 34 aufgenommen.

Die Bohrung 48 ist mit einer einen Luftkanal 44 definierenden weiteren Bohrung im Stempel 26 in der in Figur 7 dargestellten Weise strömungsmäßig verbunden. Der Luftkanal 44 geht am der Sackbohrung 48 gegenüber liegenden Ende in eine konische Erweiterung 46 bzw. in Strömungsrichtung gesehen in eine Verengung über. Diese konische Erweiterung 46 ist somit im vorliegenden Fall am unteren Ende des Stempels 26 ausgebildet.

Im zusammengebauten Zustand ist um den Kopf des Stempels 26 ein Kunststoffüberzug 28 angeordnet. Überdies ist im Inneren des Runddichtschlauchs 34 eine Füllschnur 36 vorgesehen, die - wie aus Figur 4 zu erkennen ist - einen im wesentlichen sternförmigen Querschnitt besitzt.

Die Funktionsweise der vorliegenden aufblasbaren Dichtvorrichtung 22 ist in Figur 2 zu erkennen. Wird nämlich Luft mit einem vorbestimmten Druck dem Stempel 26 von unten zugeführt, so wirkt die strömungsmäßig konisch ausgestaltete Verengung 46 in der Weise, dass der Stempel 26 in Abhängigkeit des Luftdrucks nach oben gedrückt wird und mit seinem Kunststoffüberzug 26 die Haut 18 gegen den Einleger 16 drückt. Aufgrund der Kunststoffkappe oder einer entsprechenden Beschichtung des Kopfteils des Stempels 26 wird eine Beschädigung der Haut 18 vermieden. Über den Kanal 44 und die Sackbohrung 48 gelangt die Luft in das Innere des Runddichtschlauch 34, der sich entsprechend des Luftdruckes radial ausdehnt und dabei ebenfalls die Haut 18 gegen den Einleger 16 drückt. Insgesamt kann so eine linienartige Abdichtung bis zu einer sehr scharfen Begrenzung erreicht werden, wobei die Begrenzung auf der einen Seite durch das auflagenbegrenzte Ende des Stempel 26 und auf der anderen Seite durch das Schlauchende definiert ist.

Ordnet man - wie in Figur 8 dargestellt - zwei entsprechende Dichtvorrichtungen 22 und 22' aneinander an, so kann nahezu nahtlos ein Dichtübergang zwischen zwei Dichtvorrichtungen erreicht werden, da die beiden Stempel 28 und 28' bei einer entsprechenden Ausrichtung unmittelbar benachbart zueinander die Haut 18 an den Einleger 16 andrücken. Im weiteren Verlauf wird die Haut 18 über die beiden Runddichtschläuche 24 und 34' an den Einleger 18 gedrückt. Dabei kann die Buchse auch als Teil des Werkzeugs ausgebildet sein. Sie ist also nicht unbedingt als eigenes Bauteil vorzusehen.

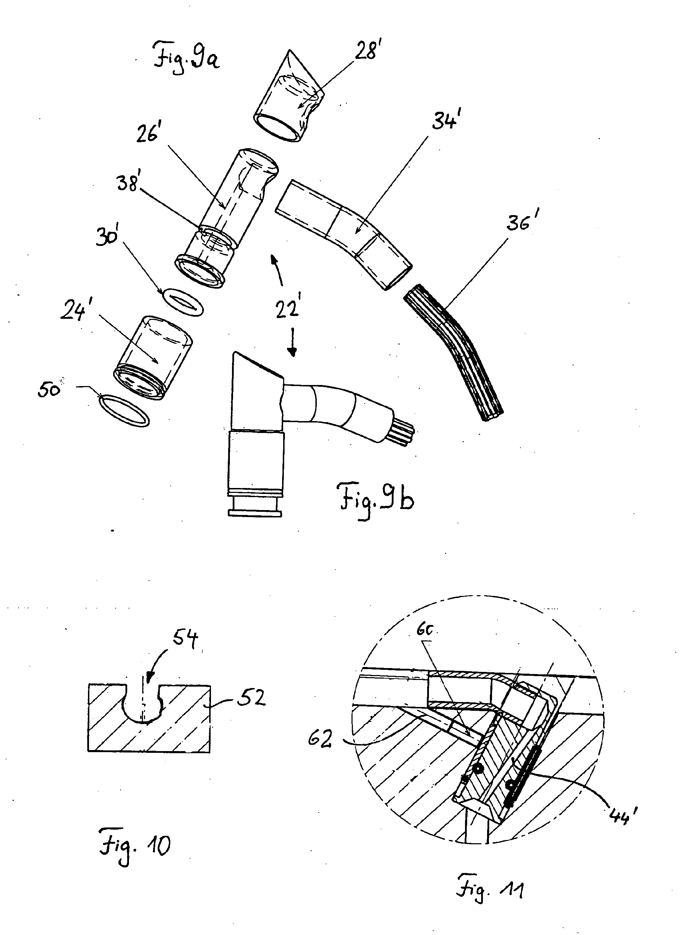

In den Figuren 9a bis 11 ist eine weitere Ausführungsform einer erfindungsgemäßen Dichtvorrichtung dargestellt. Dabei bezeichnen gleiche, mit' versehene Bezugszeichen analoge Teile wie bei der Ausführungsform der Dichtvorrichtung in den vorhergehenden Figuren 2 bis 8.

Wiederum umfasst eine erfindungsgemäße die Dichtvorrichtung 22' eine Buchse 24' oder Hülse, in der ein Stempel 26' mit einem begrenzten Hub hin und her verschieblich aufgenommen ist. Im Kopfbereich mit dem Stempel 26' verbunden ist der Runddichtschlauch 34', der, wie später noch erläutert wird, aufblasbar ist.

Der Stempel 26' besitzt einen unteren Anschlagsflansch, mit dem er im zusammengebauten Zustand in der oberen Endposition an der Buchse 24' anschlägt. Oberhalb des Anschlagsflansches ist ein im wesentlichen zylindrischer Teil des Stempels 26' angeordnet, in dem im wesentlichen mittig eine weitere, weniger tiefe Ringnut 38' angeordnet ist. In diese Ringnut 38 ist ein O-Ring 30' eingesetzt.

Ferner ist im unteren Bereich der Buchse 24' eine Dichtungsausnehmung für eine O-Ringdichtung 50 angeordnet, deren Kontur in Fig. 10 zu erkennen ist. Die O-Ringdichtung 50 dichtet die Buchse 24' in eingebautem Zustand gegenüber dem Formwerkzeug ab.

Nach dem Zusammenbau von Stempel 26' und Buchse 24' wird die Dichtvorrichtung 22' in die entsprechende Ausnehmung des Werkzeugs eingesetzt (vgl. Fig. 11). Das Werkzeug weist im Bereich der Buchsenaufnahme eine Bohrung 62 mit einem Innengewinde auf, in die eine Madenschraube 60 einschraubbar ist. Nach dem Einsetzen der Dichtvorrichtung 22' kann die Buchse 24' mittels der Madenschraube fixiert werden, wobei eine gewünschte Positionierung der Buchse 24' in deren axialen Richtung möglich ist.

Der Stempel 26' kann nun in einem festgelegten Bereich in der Buchse 24' verfahren, wobei ein Anschlag für den Stempel durch das Werkzeug und ein Anschlag durch das untere Ende der Buchse 24' festgelegt ist. Gegen diese Anschläge legt sich jeweils der Anschlagflansch des Stempels 26' an. Je nach Justierung der Buchse 24' kann der Stempel 26' der Dichtvorrichtung 22' mehr oder weniger weit noch oben verfahren werden.

Durch die Konstruktion der Schraubbefestigung der Buchse 24' kann die gesamt Dichtvorrichtung 22' schnell und leicht gewechselt werden; es ist keinerlei Spezialwerkzeug notwendig und überdies wird kein großer Platz durch die Sicherungskonstruktion beansprucht.

Die Hubbegrenzung kann wiederum im Bereich von 5 mm gewählt sein. Der Stempel 26' besitzt auf diese Weise wiederum eine Beweglichkeit von etwa 5 mm. Im Kopfbereich des Stempels ist - wie auch bei der ersten Ausführungsform - eine Sackbohrung ausgebildet. In dieser Sackbohrung 48 ist ein offenes Ende des Runddichtschlauches 34' aufgenommen ist.

Die Sackbohrung ist mit einer einen Luftkanal 44' definierenden weiteren Bohrung im Stempel 26' strömungsmäßig verbunden. Der Luftkanal 44' geht am der Sackbohrung gegenüber liegenden Ende in eine konische Erweiterung bzw. in Strömungsrichtung gesehen in eine Verengung über. Diese konische Erweiterung ist somit im vorliegenden Fall am unteren Ende des Stempels 26' ausgebildet.

Im zusammengebauten Zustand ist um den Kopf des Stempels 26' ein Kunststoffüberzug 28' angeordnet. Überdies ist im Inneren des Runddichtschlauchs 34' eine Füllschnur 36' vorgesehen, die wiederum einen im wesentlichen sternförmigen Querschnitt besitzt.

Die Funktionsweise der aufblasbaren Dichtvorrichtung 22' ist in Figur 11 zu erkennen. Wird Luft mit einem vorbestimmten Druck dem Stempel 26' von unten zugeführt, so wirkt die strömungsmäßig konisch ausgestaltete Verengung in der Weise, dass der Stempel 26' in Abhängigkeit des Luftdrucks nach oben gedrückt wird und mit seinem Kunststoffüberzug 28' eine Haut gegen einen Einleger drückt. Aufgrund der Kunststoffkappe oder einer entsprechenden Beschichtung des Kopfteils des Stempels 26' wird eine Beschädigung der Haut vermieden. Über den Kanal 44' und die Sackbohrung gelangt die Luft in das Innere des Runddichtschlauch 34', der sich entsprechend des Luftdruckes radial ausdehnt und dabei ebenfalls die Haut gegen den Einleger drückt. Insgesamt kann so eine linienartige Abdichtung bis zu einer sehr scharfen Begrenzung erreicht werden, wobei die Begrenzung auf der einen Seite durch das auflagenbegrenzte Ende des Stempel 26' und auf der anderen Seite durch das Schlauchende definiert ist.

Insgesamt kann mit der erfindungsgemäßen Dichtvorrichtung eine sichere Abdichtung bis zu den definierten Enden der Dichtvorrichtung auf aufblasbare Weise gewährleistet werden, wobei auch enge Übergänge abdichtbar sind. Kostenersparend wirkt sich der Einsatz eines Standardrundschlauches als Dichtung in der Dichtungsvorrichtung aus. Überdies kann der Stempel aufgrund der Hubbegrenzung nicht auseinander fallen und auch nicht in unerwünschter Form nach oben ausgefahren werden.

### Bezugszeichenliste

- 10: Formwerkzeug
- 12: Unteren Werkzeughälfte
- 14: Obere Werkzeughälfte
- 16: Einlegeteil
- 18: Haut
- 20: Polyurethan-Schaum (PUR-Schaum)
- 22, 22': Aufblasbare Dichtvorrichtung
- 24,24': Buchse
- 26, 26': Messingbolzen
- 28, 28': Kunststoffkappe oder Kunststoffüberzug
- 30, 30': O-Ring
- 32: Segerring
- 34, 34': Runddichtschlauch
- 36, 36': Füllschnur
- 38: Nut für O-Ring
- 40: Stufennut im Messingbolzen für Segerring
- 42: Innennut in der Buchse für Segerring
- 44, 44': Luftkanal
- 46: Konischer Einlass für Luftkanal
- 48: Bohrung für Runddichtschlauch
- 50: O-Ringdichtung
- 52: Buchsenausschnitt
- 54: Fräsausnehmung für O-Ringdichtung
- 60: Madenschraube
- 62: Bohrung

- A: Abstand zwischen Runddichtschlauch und Haut
- B: Aufblasradius

## Patentansprüche

1. Aufblasbare Dichtungsvorrichtung mit einem in einer Buchse (24, 24') aufgenommenen und über eine Luftzufuhr (44, 46, 44') unter Anlegen von Luftdruck ausfahrbaren Stempel (26, 26') sowie einem mit dem Stempel (26, 26') verbundenen Dichtschlauch (34, 34'), dessen Innenraum mit der Luftzufuhr (44, 46; 44') verbunden ist, so dass sich der Dichtschlauch (34, 34') bei Anlegen eines Luftdruckes ausdehnt,
**dadurch gekennzeichnet, dass**
der Stempel (26, 26') derart in der Buchse (24, 24') geführt ist, dass ein begrenzter Hub vorgegeben ist, wobei am Außenumfang des Stempels (26) eine Nut (40) oder Ausnehmung angeordnet ist, in welcher ein Eingriffsteil (32) der Buchse (24) hineinragt, oder wobei am Außenumfang des Stempels ein Eingriffsteil angeordnet ist, der in eine Nut oder eine Ausnehmung der Buchse hineinragt, und wobei die Nut oder Ausnehmung zusammen mit dem Eingriffsteil jeweils derart dimensioniert sind, dass der begrenzte Hub festgelegt ist.

2. Aufblasbare Dichtungsvorrichtung nach Anspruch 1,
**dadurch gekennzeichnet,**
**dass** das Eingriffsteil ein Sicherungs- oder Segerring (32) ist, der in einer Innennut 42) der Buchse (24) aufgenommen ist.

3. Aufblasbare Dichtungsvorrichtung nach Anspruch 1,
**dadurch gekennzeichnet,**
**dass** die Buchse (24') mittels einer lösbaren Schraube, insbesondere einer
Madenschraube (62) in einem Werkzeug gehalten ist.

4. Aufblasbare. Dichtungsvorrichtung nach einem der vorhergehenden Ansprüche,
**dadurch gekennzeichnet,**
**dass** im Außenumfang des Stempels (26, 26') oder im Innenumfang der Buchse (24, 24') eine Nut (38, 38') angeordnet ist, in die ein Dichtring, insbesondere ein O-Ring (30, 30'), einsetzbar ist, der eine Abdichtung zwischen Stempel (26, 26') und Buchse (24, 24') definiert.

5. Aufblasbare Dichtungsvorrichtung nach einem der vorhergehenden Ansprüche,
**dadurch gekennzeichnet,**
**dass** der eine Abdichtung bewirkende und gegen ein Einlegeteil eines Formwerkzeugs drückende Kopfteil des Stempels (26, 26') mit einem Kunststoffüberzug, einer Kunststoffkappe (28, 28'), einem Gummiüberzug oder einem Überzug eines entsprechend elastischen Materials versehen ist.

6. Aufblasbare Dichtungsvorrichtung nach einem der vorhergehenden Ansprüche,
**dadurch gekennzeichnet,**
**dass** im Innenraum des Dichtschlauchs (34, 34') eine Füllschnur (36, 36') angeordnet ist.

7. Aufblasbare Dichtungsvorrichtung nach Anspruch 4,
**dadurch gekennzeichnet,**
**dass** die Füllschnur (36, 36') in ihrem Querschnitt sternförmig ausgebildet ist.

8. Aufblasbare Dichtungsvorrichtung nach einem der vorhergehenden Ansprüche,
**dadurch gekennzeichnet,**
**dass** im Stempel (26, 26') ein Kanal (44, 44') vorgesehen ist, der eine Strömungsverbindung mit einer Sackbohrung (48) aufweist, in welche ein Ende des Dichtschlauchs (34, 34') eingesetzt oder einsetzbar ist.

9. Aufblasbare Dichtungsvorrichtung nach Anspruchs 6,
**dadurch gekennzeichnet,**
**dass** am der Sackbohrung (48) gegenüberliegenden Ende des Kanals (44, 44') ein sich in Strömungsrichtung verengender, insbesondere konisch geformter Einlass (46) vorgesehen ist.

## Claims

1. An inflatable sealing device with a plunger (26,26') held in a bushing (24,24') and able to be extended under the application of air pressure via an air supply (44,46,44'), and with a sealing tube (34,34') connected with the plunger (26,26'), the interior of which is connected with the air supply (44,46,44'), so that the sealing tube (34,34') expands on application of air pressure,
**characterized in that**
the plunger (26,26') is guided in the bushing (24,24') such that a limited stroke is provided,
wherein
on the outer circumference of the plunger (26) a groove (40) or a recess is arranged, in which an engagement part (32) of the bushing (24) projects
or wherein
on the outer circumference of the plunger an engagement part is arranged which projects into a groove or a recess of the bushing and wherein the groove or recess together with the engagement part are respectively dimensioned such that the limited stroke is established.

2. The inflatable sealing device according to Claim 1,
**characterized in that**
the engagement part is a retaining ring or a Seger ring (32), which is held in an inner groove (42) of the bushing (24).

3. The inflatable sealing device according to Claim 1,
**characterized in that**
the bushing (24') is held in a tool by means of a detachable screw, in particular a setscrew (62).

4. The inflatable sealing device according to any of the preceding claims,
**characterized in that**
in the outer circumference of the plunger (26,26') or in the inner circumference of the bushing (24,24') a groove (38,38') is arranged, into which a sealing ring, in particular an O ring (30,30') is able to be inserted, which defines a seal between plunger (26,26') and bushing (24,24').

5. The inflatable sealing device according to any of the preceding claims,
**characterized in that**
the head part of the plunger (26,26'), bringing about a seal and pressing against an insert part of a moulding tool is provided with a plastic covering, a plastic cap (28,28'), a rubber covering or a covering of a correspondingly elastic material.

6. The inflatable sealing device according to any of the preceding claims,
**characterized in that**
in the interior of the sealing tube (34,34') a filler cord (36,36') is arranged.

7. The inflatable sealing device according to Claim 4,
**characterized in that**
the filler cord (36,36') is formed in a star shape in its cross-section.

8. The inflatable sealing device according to any of the preceding claims,
**characterized in that**
in the plunger (26,26') a channel (44,44') is provided, which has a flow connection with a blind bore (48), into which an end of the sealing tube (34,34') is inserted or is able to be inserted.

9. The inflatable sealing device according to Claim 6,
**characterized in that**
at the end of the channel (44,44') lying opposite the blind bore (48) an inlet (46) is provided, narrowing in the flow direction and in particular formed in a conical shape.

## Revendications

1. Dispositif d'étanchéité gonflable comprenant un poinçon (26, 26') réceptionné dans une douille (24, 24') et pouvant être sorti au moyen d'une arrivée d'air (44, 46 ; 44') avec application de pression d'air et un flexible d'étanchéité (34, 34') relié au poinçon (26, 26'), dont l'espace intérieur est relié à l'arrivée d'air (44, 46 ; 44') de sorte que le flexible d'étanchéité (34, 34') se dilate en cas d'application d'une pression d'air
**caractérisé en ce que**
le poinçon (26, 26') est guidé dans la douille (24, 24') de telle sorte qu'une course limitée est prédéfinie,
une rainure (40) ou cavité à l'intérieur de laquelle une partie d'engrènement (32) de la douille (24) dépasse, étant disposée sur le pourtour extérieur du poinçon (26),
ou une partie d'engrènement étant disposée sur le pourtour extérieur du poinçon, laquelle partie dépasse à l'intérieur d'une rainure ou d'une cavité de la douille, et la rainure ou cavité étant dimensionnée conjointement avec la partie d'engrènement à chaque fois de telle sorte que la course limitée est définie.

2. Dispositif d'étanchéité gonflable selon la revendication 1,
**caractérisé en ce que**
la partie d'engrènement est une bague de blocage ou une bague de Seger (32), qui est réceptionnée dans une rainure intérieure ((42) de la douille (24).

3. Dispositif d'étanchéité gonflable selon la revendication 1,
**caractérisé en ce que**
la douille (24') est maintenue à l'intérieur d'une vis amovible, en particulier d'une vis sans tête (62) dans un outil.

4. Dispositif d'étanchéité gonflable selon l'une quelconque des revendications précédentes,
**caractérisé en ce que**
une rainure (38, 38') est disposée dans le pourtour extérieur du poinçon (26, 26') ou dans le pourtour intérieur de la douille (24, 24'), rainure dans laquelle une bague d'étanchéité, en particulier un joint torique (30, 30'), peut être insérée, laquelle bague définit une étanchéité entre le poinçon (26, 26') et la douille (24, 24').

5. Dispositif d'étanchéité gonflable selon l'une quelconque des revendications précédentes,
**caractérisé en ce que**
la partie supérieure, entraînant une étanchéité et appuyant contre une partie d'insertion d'un outil de moulage, du poinçon (26, 26') est dotée d'un revêtement plastique, d'un capuchon plastique (28, 28'), d'un revêtement caoutchouc ou d'un revêtement d'un matériau élastique de façon appropriée.

6. Dispositif d'étanchéité gonflable selon l'une quelconque des revendications précédentes,
**caractérisé en ce que**
une ficelle de remplissage (36, 36') est disposée dans l'espace intérieur du flexible d'étanchéité (34, 34').

7. Dispositif d'étanchéité gonflable selon la revendication 4,
**caractérisé en ce que**
la ficelle de remplissage (36, 36') est réalisée en forme d'étoile dans sa section.

8. Dispositif d'étanchéité gonflable selon l'une quelconque des revendications précédentes,
**caractérisé en ce que**
il est prévu dans le poinçon (26, 26') un conduit (44, 44') qui présente une liaison d'écoulement avec un alésage borgne (48), dans lequel une extrémité du flexible d'extrémité (34, 34') est insérée ou peut être insérée.

9. Dispositif d'étanchéité gonflable selon la revendication 6,
**caractérisé en ce que**
une entrée (46) se rétrécissant dans le sens d'écoulement, en particulier de forme conique, est prévue sur l'extrémité, faisant face à l'alésage borgne (48), du conduit (44, 44').
